# EUROPÄISCHE PATENTSCHRIFT

(11) **EP 1 621 379 B1**
(45) Veröffentlichungstag und Bekanntmachung des Hinweises auf die Patenterteilung: **22.11.2006**
(21) Anmeldenummer: 05015788.2
(22) Anmeldetag: 20.07.2005
(51) Int. Cl.: B60J 1/16, B60J 10/00

(54) **Schiebefenster für ein Kraftfahrzeug, und Kraftfahrzeug mit so einem Schiebefenster**
Vehicle sliding window, and vehicle with sliding window
Fenêtre coulissante de véhicule, et véhicule avec fenêtre coulisante

(30) Priorität: 28.07.2004 DE 102004036570
(43) Veröffentlichungstag der Anmeldung: 01.02.2006
(73) Patentinhaber: DURA Automotive Plettenberg Entwicklungs- und Vertriebs GmbH, 58840 Plettenberg (DE)
(72) Erfinder: Gerndorf, Ralf, 57413 Finnentrop (DE); Kraus, Jürgen, 58802 Balve (DE)
(74) Vertreter: Zinnecker, Armin

(56) Entgegenhaltungen:
- EP-A- 1 048 501
- WO-A-99/33678
- DE-A1- 1 680 615
- DE-U1- 9 212 967
- US-A1- 2001 054 259
- PATENT ABSTRACTS OF JAPAN Bd. 1996, Nr. 07, 31. Juli 1996 (1996-07-31) & JP 08 072540 A (HINO MOTORS LTD), 19. März 1996 (1996-03-19)

## Beschreibung

Die Erfindung betrifft ein Schiebefenster für ein Kraftfahrzeug mit einem feststehenden Fenster und einem beweglichen Fenster, das in Führungsschienen beweglich ist, die mit dem feststehenden Fenster verbunden, insbesondere verklebt sind.

Ein derartiges Schiebefenster ist aus der EP 1 048 501 A1 bekannt. Auf die Innenseite des feststehenden Fensters sind zwei parallele, beabstandete, im wesentlichen waagrecht verlaufende Führungsschienen geklebt, in denen ein bewegliches Fenster verschiebbar geführt ist. Um Wasser ableiten zu können, das sich auf der Innenseite des feststehenden und/oder beweglichen Fensters befindet, umfaßt die untere Führungsschiene zwei Wasserpassagen, die sich in vertikaler Richtung erstrecken.

Aus der DE 19 59 247 A ist ein Seitenfenster für Omnibusse bekannt, bei dem die Fensterscheibe in einer Karosserieöffnung mittels eines Profilgummis gehalten ist, der zum Ableiten von Schwitzwasser an seinem inneren unteren Teil mit einer Sammelrinne und mit Öffnungen versehen ist, die von der Sammelrinne unter der Fensterscheibe hindurch nach außen führen. Die Öffnungen sind zumindest in dem unter der Fensterscheibe liegenden Bereich von besonderen kanalartigen Einsätzen gebildet, die aus einem gegen Druck widerstandsfähigen Material wie beispielsweise hartelastischem oder zähelastischem Kunststoff bestehen und die in entsprechende Ausnehmungen im Profilgummi eingesetzt sind.

Die DE 92 12 967 U1 offenbart einen Schiebefensteraufbau für Wohnmobile und dergleichen, bei dem ein Fensterrahmen vorgesehen ist, in dem eine feststehende Fensterscheibe und eine relativ zu dieser verschiebbare Fensterscheibe vorhanden sind. Der Fensterrahmen besteht aus einem annähernd H-förmigen Fenstergummi für das Umgreifen eines Scheibenaufnahmeprofils, an dem Führungen und Dichtungen für die Fensterscheiben sowie eine Einrichtung zur Aufnahme von nach außen abführbaren Wasser gebildet sind.

Aus der DE 16 80 615 C3 ist ein Kraftfahrzeugfenster mit einer Fenstereinfassung bekannt, die Nuten aufweist, in der eine Fensterscheibe verschiebbar ist. In der Fenstereinfassung sind Wasserabflußöffnungen vorgesehen.

Aus der EP-A-1 048 501 ist ein Schiebefenster nach dem Oberbegriff des Anspruchs 1 bekannt. Die DE 16 80 615 A1, DE 92 12 967 U1, JP 08 072540 A und WO 99/33678 A zeigen ähnliche Schiebefenster.

Aufgabe der Erfindung ist es, ein verbessertes Schiebefenster der eingangs angegebenen Art vorzuschlagen.

Erfindungsgemäß wird diese Aufgabe durch die Merkmale des Anspruchs 1 gelöst. Unter einer Führungsschiene ist ein Wasserablaufteil vorgesehen. Das Wasser kann in der Führungsschiene gesammelt und dem Wasserablaufteil zugeführt werden. In dem Wasserablaufteil ist ein Labyrinth vorgesehen. Das Labyrinth ist vorzugsweise derart ausgestaltet, daß ein Eindringen von Wasser von außen verhindert wird, insbesondere Wasser aus einem Hochdruckreinigungsgerät während der Außenreinigung des Fahrzeugs.

Vorteilhafte Weiterbildungen sind in den Unteransprüchen beschrieben.

Vorzugsweise ist das Wasserablaufteil mit dem feststehenden Fenster verbunden. Besonders vorteilhaft ist es, wenn das Wasserablaufteil mit dem feststehenden Fenster verklebt ist.

Das Labyrinth des Wasserablaufteils kann dachförmige Teile und/oder Ablaufschrägen aufweisen. Diese Teile sind vorzugsweise derart geneigt, daß vom Fahrzeuginneren kommendes Wasser ablaufen kann, nicht aber Wasser, das vom Fahrzeugäußeren kommt.

Die Erfindung betrifft ferner ein Kraftfahrzeug, das durch ein erfindungsgemäßes Schiebefenster gekennzeichnet ist.

Ausführungsbeispiele der Erfindung werden nachstehend anhand der beigefügten Zeichnung im einzelnen erläutert. In der Zeichnung zeigt
- Fig. 1: eine erste Ausführungsform eines Wasserablaufteils in der Einbausituation in einem Querschnitt,
- Fig. 2: eine Draufsicht auf das Wasserablaufteil gemäß Fig. 1,
- Fig. 3: das Wasserablaufteil gemäß Fig. 1 und 2 in einer vergrößerten Schnittansicht,
- Fig. 4: ein Schiebefenster für ein Kraftfahrzeug mit einer zweiten Ausführungsform eines Wasserablaufteils in einer Draufsicht,
- Fig. 5: die Ansicht "Y" von Fig. 4 in einer perspektivischen Darstellung,
- Fig. 6: einen Schnitt längs der Linie A-A in Fig. 4,
- Fig. 7: einen Schnitt längs der Linie B-B in Fig. 4 und
- Fig. 8: die Ansicht X aus der Fig. 7.

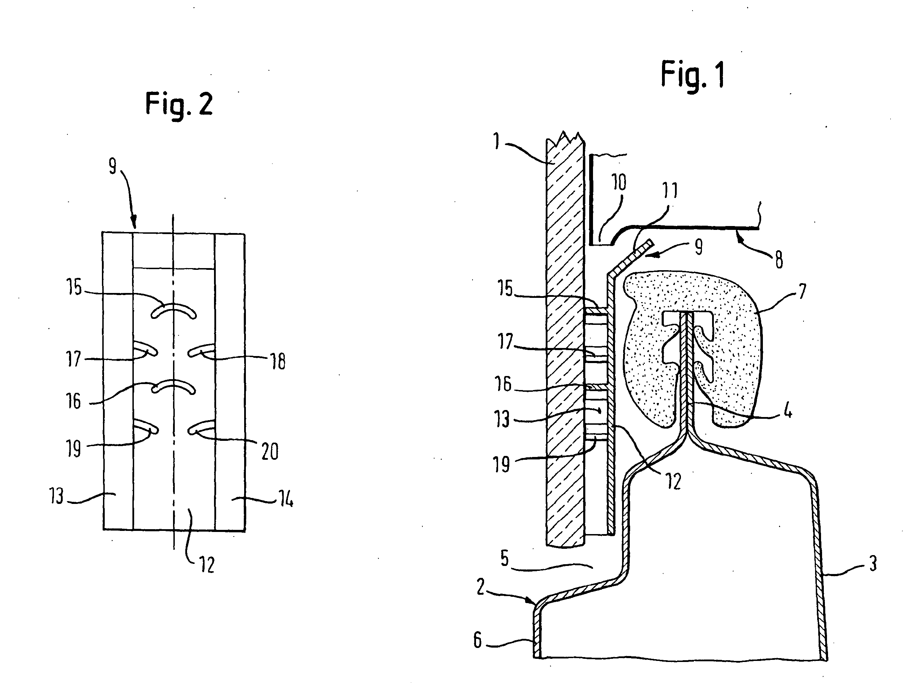

In Fig. 1 zeigt das feststehende Fenster 1 eines Schiebefensters für ein Kraftfahrzeug. Das feststehende Fenster 1 ist in einer Öffnung in der Karosserie des Kraftfahrzeugs befestigt. In Fig. 1 ist ein Teil eines äußeren Karosserieblechs 2 und eines inneren Karosserieblechs 3 dargestellt, die oberhalb der Unterkante des feststehenden Fensters 1 an einer Verbindungsstelle 4 miteinander verbunden sind. Die Verbindungsstelle 4 bildet einen umlaufenden Rand, der innerhalb der Kontur des Außenumfangs des feststehenden Fensters 1 liegt. Das feststehende Fenster 1 liegt innerhalb eines Rücksprungs 5 im äußeren Karosserieblech 2. Der untere bzw. äußere Teil 6 des äußeren Karosserieblechs 2 fluchtet im wesentlichen mit der Außenfläche des feststehenden Fensters 1.

Auf der Verbindungsstelle 4 sitzt ein Dichtrahmen 7, der eine dichtende Funktion hat und der gleichzeitig die Kanten der Verbindungsstelle 4 abdeckt, also auch die Funktion eines Kantenschutzes für den Rohbau hat.

Mit der Innenseite des feststehenden Fensters 1 ist eine Führungsschiene 8 verklebt, nämlich die untere Führungsschiene eines Paars von parallelen, beabstandeten, im wesentlichen waagrecht verlaufenden Führungsschienen, in denen das bewegliche Fenster längsverschieblich geführt ist.

Unter der Führungsschiene 8 ist ein Wasserablaufteil 9 mit der Innenseite des feststehenden Fensters 1 verklebt. An der Stelle, an der sich das Wasserablaufteil 9 befindet, ist die Unterseite der Führungsschiene 8 mit einer Öffnung 10 versehen, durch die Wasser, das in die Führungsschiene 8 läuft und dort gesammelt wird, nach unten ablaufen kann. Dieses Wasser gelangt durch die Öffnung 10 in der Führungsschiene 8 in den oberen Bereich des Wasserablaufteils 9, das im Bereich seines oberen Endes eine trichterförmige Einlaufschräge 11 aufweist. An die Einlaufschräge 11 schließt sich nach unten eine im wesentlichen parallel zur Innenseite des feststehenden Fensters 1 und im Abstand zu dieser verlaufende, im wesentlichen ebene Grundplatte 12 an, die auf beiden Seiten durch vertikale Seitenwände 13, 14 (Fig. 2) begrenzt ist und von der dachförmige Teile 15, 16 und Ablaufschrägen 17, 18, 19, 20 im wesentlichen rechtwinklig zum feststehenden Fenster 1 hin abstehen. Die dachförmigen Teile 15, 16 und die Ablaufschrägen 17 - 20 bilden ein Labyrinth. Von oben eindringendes Wasser kann durch das Labyrinth hindurch nach unten auslaufen, da die Schrägflächen der dachförmigen Teile 15, 16 und der Ablaufschrägen 17 bis 20 jeweils nach unten geneigt sind. Von unten eindringendes Wasser, insbesondere aus einem Hochdruckreinigungsgerät, kann das Labyrinth jedoch nicht nach oben durchdringen, da es von den Schrägflächen der dachförmigen Teile 15, 16 und der Ablaufschrägen 17 - 20 zurückgehalten wird. In der Projektion von unten nach oben überlappen sich die Ablaufschrägen 19, 20 und das dachförmige Teil 16, die auf diese Weise eine erste Barriere bilden, die den gesamten Bereich zwischen den Seitenflächen 13 und 14 abdeckt. In entsprechender Weise wird über dieser ersten Barriere von der Ablaufschräge 17, dem dachförmigen Teil 15 und der Ablaufschräge 18 eine zweite Barriere gebildet, die ebenfalls in der Projektion den gesamten Bereich zwischen den Seitenflächen 13 und 14 überdeckt.

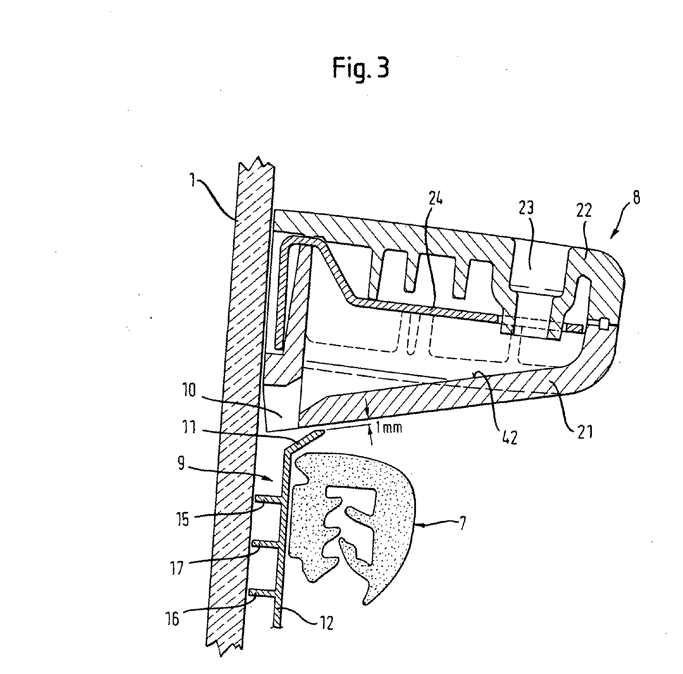

Fig. 3 zeigt zusätzlich die Einzelheiten der Führungsschiene 8. Diese besteht aus einer Unterschale 21 und einer Oberschale 22, in der eine Nut 23 vorgesehen ist, in die ein Stift des beweglichen Fensters (in der Zeichnung nicht dargestellt) eingreift. Die Oberschale 22 und die Unterschale 21 sind miteinander verbunden, insbesondere verklebt und/oder verschweißt. In dem Bereich zwischen Unterschale 21 und Oberschale 22 ist ein Einlegeteil 24 aus Blech vorgesehen, das eine Verstärkung der Führungsschiene 8 bewirkt. Über dem Wasserablaufteil 9 ist die Unterschale 21 mit einer Öffnung 10 versehen, durch die Wasser in die obere Öffnung des Wasserablaufteils 9 einlaufen kann. Hierzu ist die innere Bodenfläche 42 der Unterschale 21 in der aus Fig. 3 ersichtlichen Weise zur Öffnung 10 hin geneigt. Die innere Bodenfläche 42 ist ferner auch in Längsrichtung der Unterschale 21 zur Öffnung 10 hin geneigt, und zwar von beiden Seiten. Über die Länge der Führungsschiene 8 verteilt können mehrere Wasserablaufteile 9 vorgesehen sein.

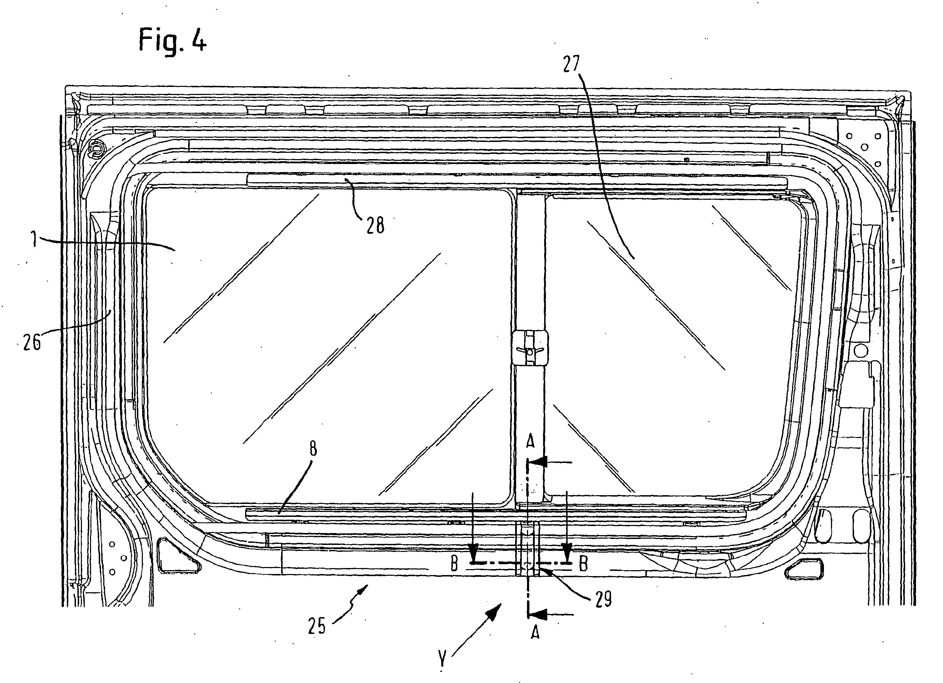

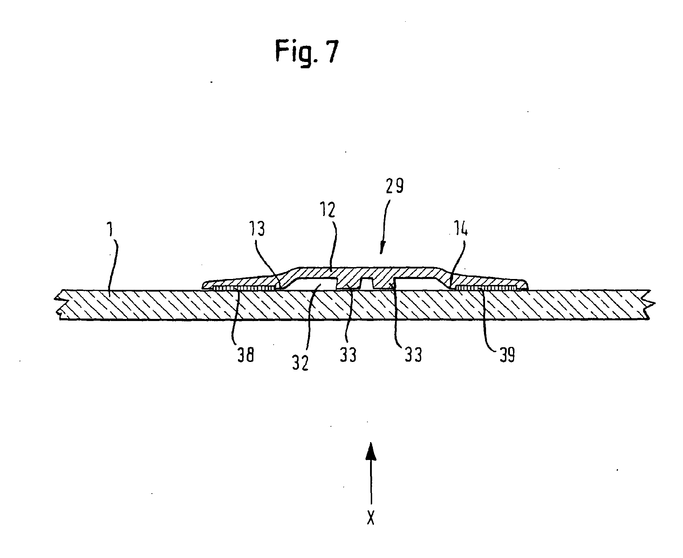

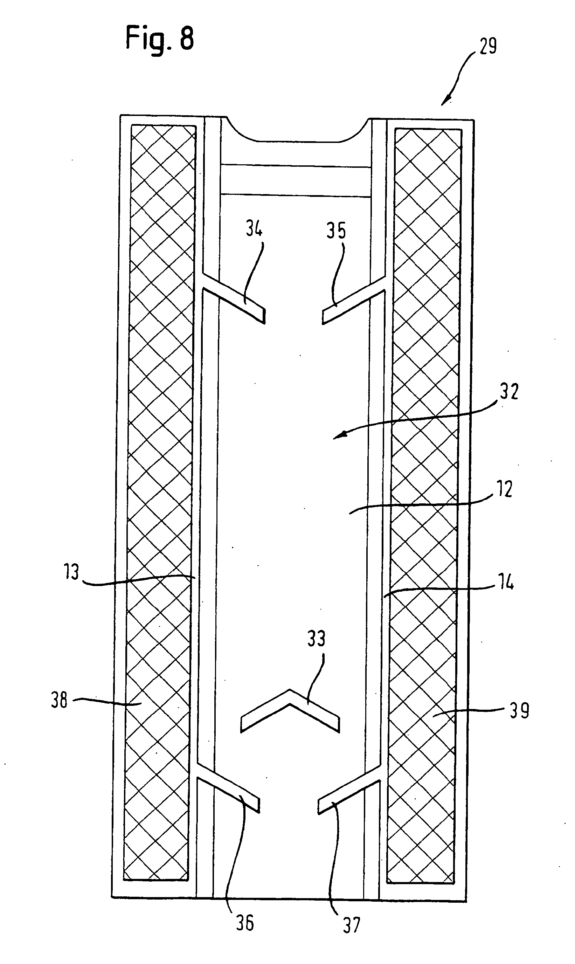

In den Fig. 4 - 8 ist eine zweite Ausführungsform dargestellt. Das Schiebefenster 25 ist in eine Öffnung in der Karosserie 26 oder in einer Fahrzeugtür eingepaßt. Es umfaßt ein feststehendes Fenster 1 und ein bewegliches Fenster 27, das in den parallelen, beabstandeten, im wesentlichen waagrecht verlaufenden Führungsschienen 8, 28 längsverschieblich geführt ist. Die Führungsschienen 8, 28 sind mit dem feststehenden Fenster 1 auf dessen Innenseite verklebt.

Im Bereich der Mitte der unteren Führungsschiene 8 ist ein Wasserablaufteil 29 vorgesehen, das unter der unteren Führungsschiene 8 liegt. Die untere Führungsschiene 8 ist in Fahrzeug-Längsrichtung derart geneigt, daß Wasser, das sich darin sammelt, von beiden Seiten zum Wasserablaufteil 29 läuft.

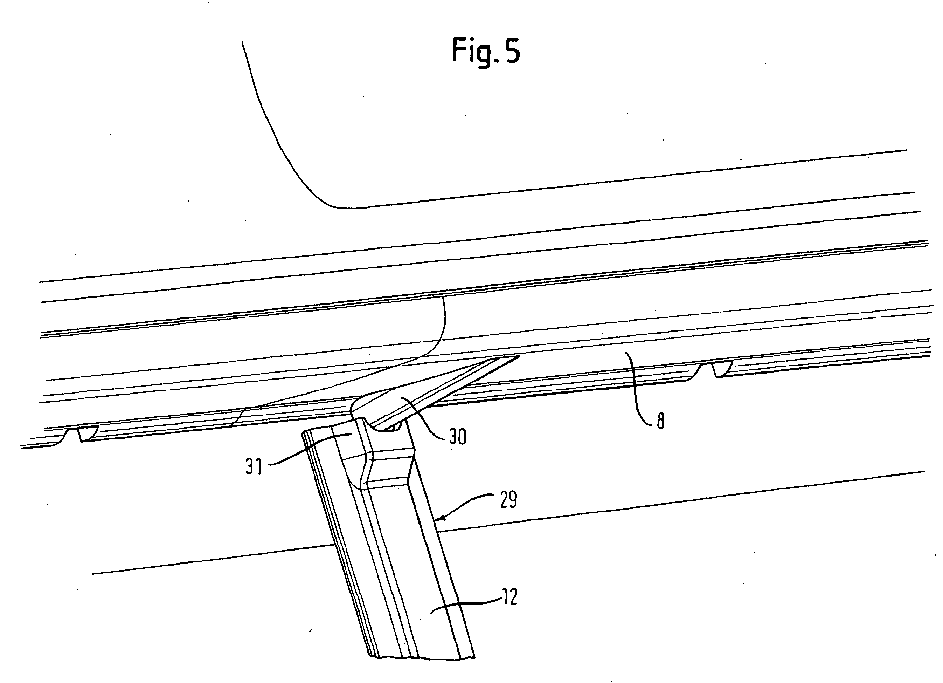

Im Bereich des Wasserablaufteils 9 weist die untere Führungsschiene 8 eine Ablaufrinne 30 auf, die zum Wasserablaufteil 29 hin in der aus Fig. 5 ersichtlichen Weise geneigt ist und die in einen Einlauftrichter 31, der am oberen Ende des Wasserablaufteils 29 vorgesehen ist, einmündet.

Das Wasserablaufteil 29 umfaßt eine Grundplatte 12 und Seitenwände 13, 14, die zusammen mit der Innenseite des feststehenden Fensters 1 einen oben und unten offenen Durchlaufraum 32 begrenzen.

In diesen Durchlaufraum 32 ragen ein dachförmiges Teil 33 und Ablaufschrägen 34, 35, 36, 37 hinein, die von der Grundplatte 12 rechtwinklig abstehen. Die Neigungen des dachförmigen Teils 33 und der Ablaufschrägen 34 - 37 ermöglichen es, daß von oben eindringendes Wasser den Durchlaufraum 32 durchlaufen und unten aus diesem heraustreten kann. Im oberen Bereich des Wasserablaufteils 29 sind zwei einander gegenüberliegende Ablaufschrägen 34, 35 vorgesehen, die jeweils mit einer Seitenwand 13, 14 verbunden sind und von dieser nach innen und unten verlaufen. Von oben kommendes Wasser läuft an diesen Ablaufschrägen 34, 35 nach unten und in die Lücke zwischen beiden Anlaufschrägen 34, 35 hinein. Es gelangt von dort zu dem dachförmigen Teil 33, von dessen dachförmigen Schrägen, die von der Mitte nach außen jeweils nach unten geneigt verlaufen, es nach außen abgelenkt wird. Von dort gelangt das Wasser zu den unteren Ablaufschrägen 36, 37, die im wesentlichen wie die Ablaufschrägen 34, 35 ausgebildet sind, also von jeweils einer Seitenwand 13, 14 nach innen und unten verlaufen und zwischen sich eine Lücke lassen.

Von unten eindringendes Wasser, beispielweise aus einem Hochdruckreinigungsgerät, das die Lücke zwischen den unteren Ablaufschrägen 36, 37 durchdringt, wird von der Unterseite des dachförmigen Teils 33 zurückgehalten. Ein weiteres Hindernis auf dem Weg nach oben bilden die oberen Ablaufschrägen 34, 35. In der Projektion überdecken sich die Ablaufschrägen 36, 37 und das dachförmige Teil 33 vollständig; sie überdecken den gesamten Bereich zwischen den Seitenwänden 13 und 14.

Die Seitenwände 13, 14 sind durch Klebebänder 38, 39 mit der Innenseite des feststehenden Fensters 1 verklebt. Die Klebebänder verlaufen parallel zueinander und im Abstand voneinander. Sie erstrecken sich über die gesamte Länge des Wasserablaufteils 29.

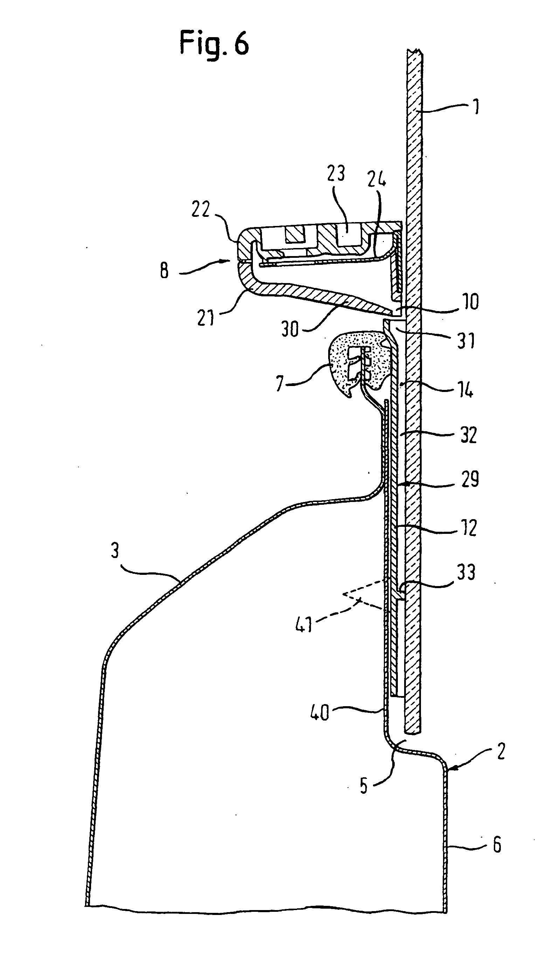

Das feststehende Fenster 1 und das Wasserablaufteil 29 sind in der aus Fig. 6 ersichtlichen Weise mit dem vertikal nach oben weisenden, im wesentlichen ebenen, abgekröpften Endteil 40 des unteren bzw. äußeren Teils 6 des äußeren Karosserieblechs 2 verklebt, und zwar durch die Kleberaupe 41, die auf der Höhe des dachförmigen Teils 33 liegt.

## Patentansprüche

1. Schiebefenster für ein Kraftfahrzeug mit einem feststehenden Fenster (1) und einem beweglichen Fenster (27), das in Führungsschienen (8; 28) beweglich ist, die mit dem feststehenden Fenster (1) verbunden, insbesondere verklebt sind, wobei unter einer Führungsschiene (8) ein Wasserablaufteil (9; 29) vorgesehen ist,
**dadurch gekennzeichnet,**
**daß** in dem Wasserablaufteil (9; 29) ein Labyrinth vorgesehen ist.

2. Schiebefenster nach Anspruch 1, **dadurch gekennzeichnet, daß** das Wasserablaufteil (9; 29) mit dem feststehenden Fenster (1) verbunden, insbesondere verklebt ist.

3. Schiebefenster nach Anspruch 1 oder 2, **dadurch gekennzeichnet, daß** das Labyrinth dachförmige Teile (15, 16; 33) und/oder Ablaufschrägen (17, 18, 19, 20; 34, 35, 36, 37) aufweist.

4. Kraftfahrzeug, **gekennzeichnet durch** ein Schiebefenster nach einem der Ansprüche 1 bis 3.

## Claims

1. Vehicle sliding window with a fixed window (1) and a movable window (27) which is movable in guide rails (8; 28) which are connected, in particular are adhesively bonded, to the fixed window (1), with a water drainage part (9; 29) being provided below one guide rail (8), **characterized in that** a labyrinth is provided in the water drainage part (9; 29).

2. Sliding window according to Claim 1, **characterized in that** the water drainage part (9; 29) is connected, in particular is adhesively bonded, to the fixed window (1) .

3. Sliding window according to Claim 1 or 2, **characterized in that** the labyrinth has roof-shaped parts (15, 16; 33) and/or drainage slopes (17, 18, 19, 20; 34, 35, 36, 37).

4. Vehicle **characterized by** a sliding window according to one of Claims 1 to 3.

## Revendications

1. Fenêtre coulissante pour un véhicule automobile comprenant une fenêtre fixe (1) et une fenêtre mobile (27) qui peut être déplacée dans des rails de guidage (8; 28) qui sont reliés, en particulier collés, à la fenêtre fixe (1), une partie d'évacuation d'eau (9; 29) étant prévue en dessous d'un rail de guidage (8),
**caractérisée en ce qu'**un labyrinthe est prévu dans la partie d'évacuation d'eau (9; 29).

2. Fenêtre coulissante selon la revendication 1, **caractérisé en ce que** la partie d'évacuation d'eau (9; 29) est reliée, en particulier collée, à la fenêtre fixe (1).

3. Fenêtre coulissante selon l'une quelconque des revendications 1 ou 2, **caractérisée en ce que** le labyrinthe présente des parties en forme de toit (15, 16; 33) et/ou des biseaux d'évacuation (17, 18, 19, 20; 34, 35, 36, 37).

4. Véhicule automobile **caractérisé par** une fenêtre coulissante selon l'une quelconque des revendications 1 à
